# EUROPEAN PATENT SPECIFICATION

(11) **EP 2 756 539 B1**
(45) Date of publication and mention of the grant of the patent: **07.11.2018**
(21) Application number: 11872436.8
(22) Date of filing: 16.09.2011
(51) Int. Cl.: H01M 8/2475, H01M 8/04014, H01M 8/04119

(54) **APPARATUS AND METHOD FOR OPERATING FUEL CELLS IN COLD ENVIRONMENTS**
VORRICHTUNG UND VERFAHREN ZUM BETRIEB VON BRENNSTOFFZELLEN IN KALTEN UMGEBUNGEN
APPAREIL ET PROCÉDÉ POUR LE FONCTIONNEMENT DE PILES À COMBUSTIBLE DANS DES ENVIRONNEMENTS FROIDS

(43) Date of publication of application: 23.07.2014
(73) Proprietor: SFC Energy AG, 85649 Brunnthal (DE)
(72) Inventor: BROWN, Dana Harrison, Spruce Grove, Alberta T7Y 1C7 (CA); GRIFFITH, Evan Thomas, Edmonton, Alberta T6G 0A9 (CA)
(74) Representative: Grünecker Patent- und Rechtsanwälte PartG mbB
(86) International application number: PCT/CA2011/001042
(87) International publication number: WO 2013/037031

(56) References cited:
- EP-A1- 2 164 123
- WO-A2-03/081704
- WO-A2-2007/110587
- DE-A1-102009 034 380
- US-A1- 2003 134 168
- US-A1- 2004 013 923
- US-A1- 2004 062 964
- US-A1- 2004 166 389
- US-A1- 2007 122 670
- US-A1- 2008 063 912

## Description

### TECHNICAL FIELD:

The present disclosure is related to the field of apparatus and methods for operating fuel cells in extreme cold environments, in particular, apparatus and methods for operating Polymer Electrolyte Membrane ("PEM") fuel cells in extreme cold and remote environments for industrial applications.

### BACKGROUND:

There are many applications for efficient, portable, and remote power in artic, sub-artic, and other low temperature climates. For example, the oil and gas sector has been meeting the demand for remote power in a variety of ways. Gas and diesel generators are common and effectively meet the need for high power demand when required, but they are unsuitable for a number of applications due to restrictions on noise, emissions, or surface temperature. They also need to be serviced frequently, preventing them from being used in highly remote applications that do not require regular personnel.

It is known to use solar power in remote/low-power-demand areas as they do not require servicing, are silent and have a long lifetime. However, solar cells collect irregular amounts of power, especially in the winter, and solar panel arrays become enormous and unruly in an attempt to compensate for this. They can also become covered by snow or debris preventing power collection, which means they still require some degree of consistent maintenance.

Thermoelectric generators ("TEGs") are another way to provide remote power. They burn natural gas or propane, available on site, to create a large difference in temperature that can be used to generate electricity. One issue with TEG technology is that it is highly inefficient, at roughly 2.5% thermodynamic efficiency, which results in a significant waste of fuel. This inefficiency also results in unnecessarily high emissions. Another issue with TEGs is that they generate a great deal of heat, making them potentially inappropriate for hazardous locations.

Another method of off-grid power is the use of batteries electrically tied together in large banks. The benefits of battery banks include silent operation and stable power output. Batteries require regular charging though, and also need protection from the elements to perform optimally. Due to their low energy density, many batteries are required to provide power for extended periods of time. Batteries are also heavy and cumbersome - moving them regularly for charging is an inefficient use of personnel.

It is known that Polymer Electrolyte Membrane ("PEM") fuel cells can also provide off-grid power for small-scale power applications. PEM fuel cells inherently have a lower efficiency than other types of cells due to high activation losses, making them unsuitable for large scale power generation. PEM cells also tend to function at cooler operating temperatures than other types of cells. Thus, PEM technology, and more specifically direct methanol fuel cells ("DMFC"), has previously been aimed at low-power applications which includes portable power (from micro applications up to 800 W) as well as some light-duty transportation (eg. forklifts, scooters), with most of the market aimed at small electronic devices such as cell phones and laptops. Few commercially available DMFCs are suitable for larger scale power (for example, over 250 W) and current manufacturers tend to provide cells for niche areas such as leisure, security, infrastructure for communications, and military applications.

Present DMFC systems are not sustainable to operate in extreme cold weather (for example, under -20°C). This is due to DMFCs retaining liquid water during normal operation. If this water were to freeze, the expansion of the water can cause the cell to swell and crack. Current fuel cell systems use some combination of insulation and electrical control to ensure the cell remains on, maintaining a cell temperature above freezing in cold environments. However, in extreme cold these systems are not able to maintain internal temperatures to allow for operation lower than lower than - 20°C.

One critical issue facing some DMFC systems operating in cold weather environments is that the highly humidified gaseous products generated by the cell reaction readily condense and freeze upon exposure to the atmosphere or internal freezing temperatures. Depending on where this ice formation occurs, it can cause a variety of issues; if the ice build-up occurs near or around the cell there can be a potential slipping hazard; ice build-up on a unit itself can cause additional, unbalanced weight that may interfere with the operation of the unit and can be difficult to remove the unit in the field; and ice build-up at the exhaust outlet can prevent the cell from operating properly and can potentially shut the system down.

Often this technology is utilized to provide remote power in all conditions for military, security and other critical infrastructure operations. Potential for further safety hazard is created if critical infrastructure reliant on the unit loses power due to failure of the technology.

It is, therefore, desirable to provide an apparatus and method for operating a remote power supply in extreme cold environments that overcomes the shortcomings of the prior art.

### SUMMARY:

An apparatus according to claim 1 and a method for operating a remote power supply in extreme cold environments according to claim 9 are provided. The present disclosure relates to a system and method to manage water and heat exhaust produced by a fuel cell in cold environments. Water can be produced by a fuel cell or fuel cell unit as a by-product of electricity generation. Some of this water can be fed back into the fuel cell; however, excess water can be disposed of in such a way that ice formation does not interfere with the operation of the fuel cell. The elements of the fuel cell system can be contained inside an enclosure. The enclosure can be insulated. The apparatus can be internal to a fuel cell system or a modification made external to an existing system.

The apparatus comprises a tube, preferably an insulated tube, connected to an exhaust outlet of a fuel cell or fuel cell unit and which leads into a chamber that can condense and collect water. A second tube leads from the top of the water condensation chamber to the outside of the enclosure, preferably insulated enclosure. Any vapour from a fuel cell or fuel cell unit that condenses into water can be held within the container and the water can then freeze to ice. Water can freeze in the container such that it does not plug up the fuel cell exhaust outlet, and does not disrupt the operation of the fuel cell and damage it. The chamber can be at an intermediate temperature between the ambient external to the enclosure and the ambient temperature internal to the enclosure and can facilitate condensation without the need for forced-air heat exchangers. The second tube can allow venting of remaining uncondensed vapour to the outside of the enclosure. This venting can prevent a build-up of pressure within the system that could interfere with the operation of the fuel cell, as well as prevent corrosion issues inside the container. The apparatus or system also includes a component whereby heat emitted from a fuel cell or fuel cell unit can be directed around the water chamber, to the exhaust lines to keep them warm. The directing of this exhaust heat through channels can allow for operation at extremely low temperatures without ice build-up at the end of the system's outlet tube or on the intake air vent of the system.

Broadly stated, in some embodiments, an apparatus is provided for operating at least one fuel cell or fuel cell unit comprising an exhaust outlet, the apparatus comprising: an enclosure surrounding the cell or unit for capturing heat emitted from the cell or unit, the enclosure comprising an enclosure outlet; a first tube with one end operatively connected to the exhaust outlet, the first tube configured for collecting water from the exhaust outlet; a chamber operatively connected to a second end of the first tube; and a second tube leading from the top of the chamber to the enclosure outlet, wherein the chamber condenses and holds water and wherein the enclosure collects heat emitted from the cell or unit.

Broadly stated, in some embodiments, a fuel cell system is provided, comprising: at least one fuel cell or fuel cell unit comprising an exhaust outlet; an enclosure surrounding the cell or unit for capturing heat emitted from the cell or unit, the enclosure comprising an enclosure outlet; a first tube with one end operatively connected to the exhaust outlet, the first tube configured for collecting water from the exhaust outlet; a chamber operatively connected to a second end of the first tube; and a second tube leading from the top of the chamber to the enclosure outlet, wherein the chamber condenses and holds water and wherein the enclosure collects heat emitted from the cell or unit.

Broadly stated, in some embodiments, a method is provided for operating at least one fuel cell or fuel cell unit comprising an exhaust outlet, the method comprising the steps of: enclosing the cell or unit; receiving water vapour from the exhaust outlet produced as a by-product of electricity production within the cell or unit; condensing at least a portion of the water vapour within a chamber into water; and venting non-condensed water vapour from the chamber, wherein the fuel cell operates at temperatures below - 20°C.

### BRIEF DESCRIPTION OF THE DRAWINGS:

Figure 1 is a block flow diagram of an embodiment of a remote power source apparatus;
Figure 2 is a block flow diagram of a further embodiment of a remote power source apparatus showing an expanded view of a fuel cell unit; and
Figure 3 is a block flow diagram of a further embodiment of a remote power source apparatus including a heat exhaust structure.

### DETAILED DESCRIPTION OF EMBODIMENTS

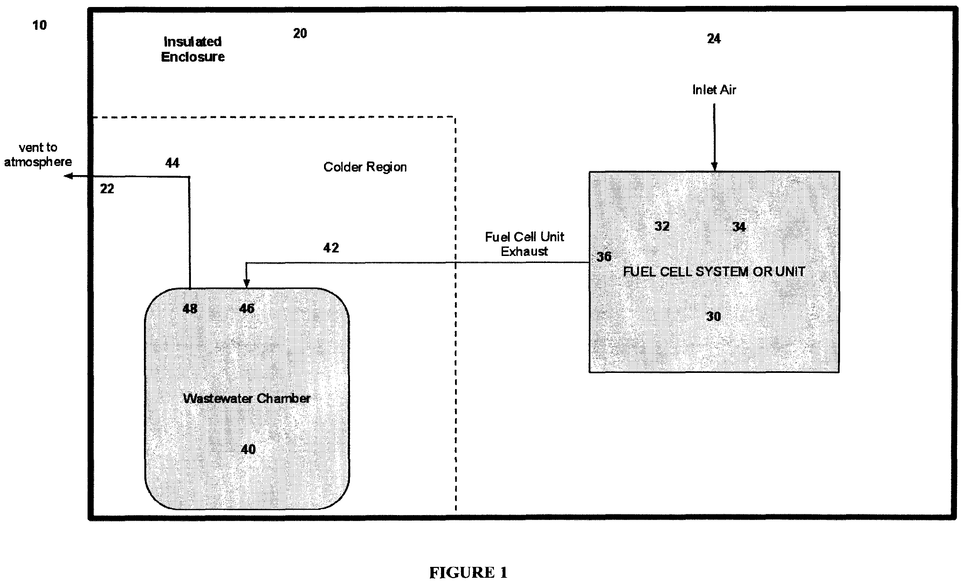

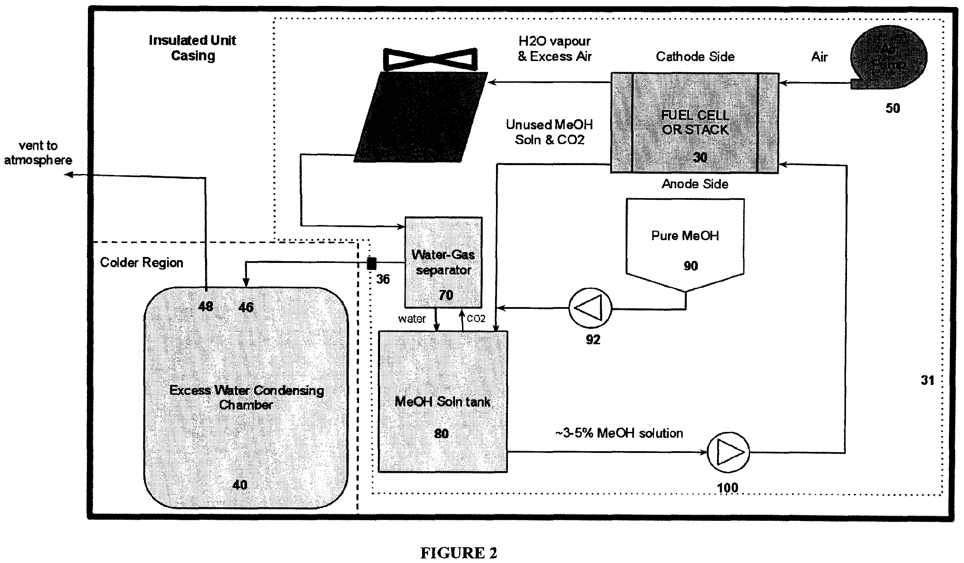

Referring to Figures 1 and 2, an embodiment of a power source apparatus 10 is shown. The components of apparatus 10 comprise enclosure 20 surrounding a fuel cell 30, and a water collection/condensation chamber 40. Enclosure 20 comprises an outlet 22. In some embodiments, enclosure 20 can comprise vents and/or an air intake 24. Either air intake 24, outlet 22, or both can comprise adjustable vents to regulate the amount of air entering or exiting enclosure 20.

In some embodiments, enclosure 20 can both house and protect fuel cell 30 as well as enclose operational equipment and connections required to run fuel cell 30 or fuel cell unit 31. Enclosure 20 can comprise insulation to retain heat emitted from fuel cell 30 or fuel cell unit 31 within enclosure 20. In some embodiments, the insulation of enclosure 20 can be non-uniform. In some embodiments, chamber 40 can be disposed within enclosure 20 in an area of lower insulation. In other words, the area of enclosure 20 proximate chamber 40 can be less insulated than other areas of enclosure 20. This differential insulation, and the lack of proximity to fuel cell 30 or fuel cell unit 31 , can result in a colder region of enclosure forming around chamber 40 when the temperature external to enclosure 20 is lower than the ambient (internal) temperature of enclosure 20.

In some embodiments, the majority of space available internal to enclosure 20, excluding internal components, can be filled with insulation. The insulation type can comprise a variety of forms of insulation where the overall R-value of the insulation provides at least R10 value to the internal components. The exterior material of enclosure 20 can be designed to protect components internal to enclosure 20. As would be understood by one skilled in the art, the exterior material can comprise a variety of forms from moulded plastic to aluminium. In some embodiments, the exterior material can be rated to function in at least -55°C. In some embodiments, for extreme conditions, enclosure 20 can comprise a double-walled housing to provide increased protection as well as added insulation R-value to the system.

Fuel cell 30 can comprise cathode 32 and anode 34. As would be understood by one skilled in the art, in some embodiments, multiple fuel cells 30 can be arranged together as a fuel cell stack without departing from the function of apparatus 10. In some embodiments, fuel cell 30 can be operatively coupled to a process condenser 60 with fan to control condensation rate and a water-gas separator tank 70 to form operating fuel cell unit 31.

In some embodiments, fuel cell 30 can be a direct methanol fuel cell (DMFC), although it would be understood by one skilled in the art that any appropriate fuel cell may be substituted. For example, other cells, including Polymer Electrolyte Membrane (PEM) fuel cells, which tend to operate with low temperatures and have water as a by-product can be substituted. Some known PEM fuel cells include hydrogen PEM fuel cells, Direct Ethanol Fuel Cells (DEFCs) and Direct Formic Acid Fuel Cells (DFAFCs). In some embodiments, for each cell 30, two chemical half reactions occur to make the net reaction shown below.
Anode Half Reaction: CH₃OH(I) + H₂0(I) → CO₂ + 6 H⁺ + 6e⁻
Cathode Half Reaction: 3/2 O₂ + 6 H⁺ + 6 e⁻ -> 3 H₂O(v)
Net Redox Reaction: CH₃OH(I) + 3/2 O₂ → CO₂ + 2 H₂O(v)
where water vapour and excess air can exit fuel cell or fuel cell unit 31 though a cathode fuel cell exhaust 36. CO₂ produced by the reaction at anode 34 can exit through an anode outlet 38.

In some embodiments, water condensing chamber 40 can comprise a container to collect and store water. The water condensing chamber 40 is internal to enclosure 20. In some embodiments, water condensing chamber 40 can be made of plastics, rust-proof/water-resistant metal, or other appropriate materials. Water condensing chamber 40 can be rectangular, cylindrical or any other appropriate shape. In some embodiments, the size the chamber 40 is determined by an amount of fuel supplied to fuel cell 30, such that the container is calibrated to receive the appropriate amount of water as a by-product. Water condensing chamber 40 can be positioned next to, above, or below fuel cell 30. It would be understood by one skilled in the art that the characteristics of water condensing chamber 40 may be varied or substituted while maintaining the same function and without departing from the scope intended. Water condensing chamber 40 is connected to a first tube 42 and is connected to a second tube 44. Tubes 42, 44 can be made of Teflon™ or other common water-resistant tubing materials. In some embodiments, tubes 42, 44 can be insulated with pipe/tubing insulation, or other appropriate materials, to prevent freezing of water contained therein. It would be understood by one skilled in the art that the characteristics of tubes 42, 44 may be varied or substituted while maintaining the same function and without departing from the scope intended. In some embodiments, water condensing chamber 40 can be sealed with the exception of chamber inlet 46 and chamber outlet 48. Chamber inlet 46 and chamber outlet 48 are located on the top of condenser 40. One end of first tube 42 is connected to fuel cell exhaust outlet 36 of fuel cell 30 or fuel cell unit 31 and a second end of first tube 42 is connected to chamber inlet 46. One end of second tube 44 is connected to chamber outlet 48 and a second end of second tube 44 can be connected to enclosure 20, proximate to outlet 22.

In operation, apparatus 10 can provide electricity to maintain sufficient charge in external batteries used to power electrical devices such as: communication repeaters, air monitors, water monitors, weather monitors, seismic monitors, remote surveillance, remote internet and cellular phone systems, signal boosters, chemical injection pumps, compression systems, remote portable power systems, electronic shut down devices, man down repeater stations, LED lighting solutions, video and communication packages, camera and filming power sources, wildlife monitoring systems. In some embodiments, devices such as these can be connected to a battery bank system that can be maintained and kept charged by the fuel cell system. Fuel cell 30 or fuel cell unit 31 produces water vapour as a by-product. This water vapour exits fuel cell 30 or fuel cell unit 31 through fuel cell exhaust 36 into first tube 42 and into water condensing chamber 40 through chamber inlet 46. In some embodiments, a U-tube effect should not be allowed in either tube in order to prevent condensed water from forming a plug. In some embodiments, the local temperature around water condensing chamber 40 can be reduced, for example, due to the distance from the heat generated by fuel cell 30 or fuel cell unit 31, or due to less local insulation of enclosure 20. A reduced local temperature can allow collected water vapour to condense into liquid water at the bottom of water condensing chamber 40. Furthermore, a pressure drop associated with connecting pressurized exhaust from first tube 42 to an ambient pressure of water condensing chamber 40 further facilitates condensation. In some embodiments, the reduced local temperature of enclosure 20, within the vicinity of excess condensing chamber 40 can be below 0°C. In some embodiments, liquid water condensed in water condensing chamber 40 can freeze into ice. In some embodiments, condensed water can be stored in chamber 40 as water or ice.

Low moisture air and water vapour that has not condensed in water condensing chamber 40, can exit through chamber outlet 48 into second tube 44 and outside of enclosure through enclosure outlet 22. In some embodiments, enclosure outlet 22 can lead to the external environment. This venting can prevent pressure from building in water condensing chamber 40. In some embodiments, chamber 40 is removable from apparatus 10 and collected water or ice can be emptied from chamber 40. One skilled it the art would recognize that including a manual or actuated purging system involving a pump or drain would not depart from the scope of this disclosure and the ability to empty the container as required. In some embodiments, chamber 40 can comprise a frost-free condensate pump (not shown) to allow for non- frozen water to be pumped from chamber 40 at predetermined intervals to allow for longer autonomy or larger fuel sources to be used without chamber 40 being limited by the size or amount of fuel. Condensed fluid can be pumped out of chamber 40 as required. Referring to Figure 2, an embodiment of apparatus 10 is shown where water condensing chamber 40 can be operatively coupled to fuel cell unit 31. As would be understood by one skilled in the art, the mechanical equipment which can be used to run operating fuel cell unit 31 includes: a fuel cell or stack 30; an air pump 50; a process condenser 60 with fan to control condensation rate; a water-gas separator tank 70; a methanol solution tank 80; a pure methanol supply 90 with a fuel metering pump 92 and an anode circulation pump 100. Different sizes and types of tubing can be used to connect this equipment. Air filters and fuel filters (not shown in the figures) can be used to lengthen the life of the fuel cell stack. The apparatus, systems, and methods of the present invention can be used to extend the operating temperature of fuel cell unit 31 up to 25°C lower.

Process condenser 60 can condense an initial amount of liquid water from the exhaust water vapour from fuel cell 30. Water-gas separator 70 can separate fuel cell 30 exhaust gases and uncondensed water vapour from process condenser 60 from condensed water coming from process condenser 60 such that the gas is exhausted and condensed water is sent to a methanol solution tank 80. Water-gas separator 70 can use gravity and a difference in pressure between the containers to separate the gases and to bubble the carbon dioxide products up through condensed water and out, along with the excess air. Meanwhile, liquid water can fill the separator, up to an overflow level, at which point it can drain into methanol solution tank 80.

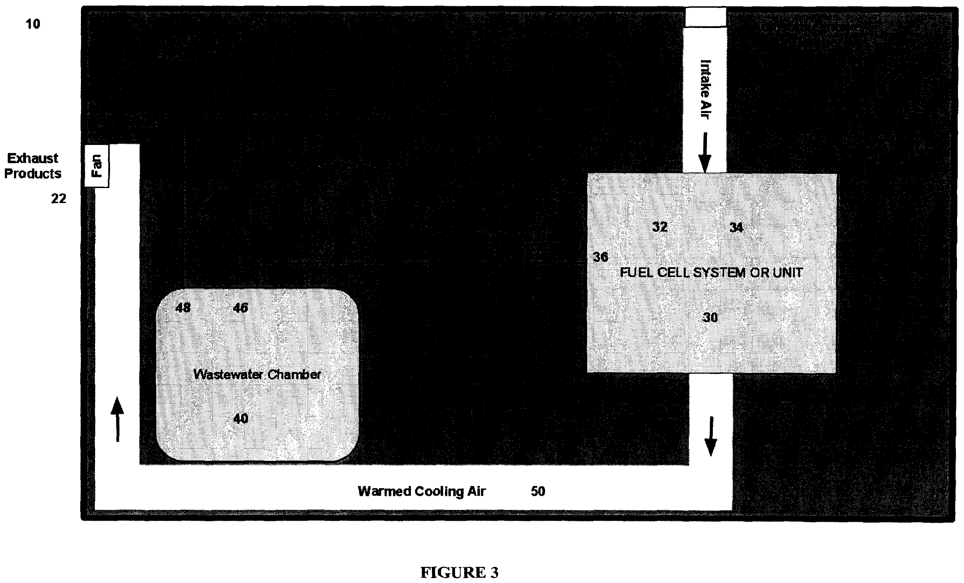

Referring to Figure 3, apparatus 10 comprises heat exhaust structure 50. In some embodiments, heat exhaust structure 50 can comprise ambient air flow channels which extend throughout the interior of enclosure 20. In some embodiments, channels can be formed by voids in insulation internal to enclosure 20. Internal insulation (shown as shaded area) can be any appropriate insulating material, for example, high density black poly-styrene foam insulation. In some embodiments, the insulation can be cut to fit inside enclosure 20 and it can also shape heat exhaust structure 50 as channels cut out of the insulation to form a path of travel for the heat exhaust.

In operation, heat produced and emitted from fuel cell 30 or fuel cell unit 31 during electricity production by fuel cell 30 can exit through fuel cell exhaust 36 and be collected by heat exhaust structure 50. The warm ambient air of heat exhaust structure 50 can help prevent the freezing of water in components internal to enclosure 20. In some embodiments, heat exhaust structure 50 can be structured below or around chamber 40. In some embodiments, heat exhaust structure 50 can be structured below or around cathode 32. Heat exhausted through structure 50 can maintain the temperature internal to enclosure 20 within a range. In some embodiments, the internal ambient temperate within enclosure 20 can be -20°C to +35°C. The use of heat exhaust prevents freezing of components of apparatus 10 internal to enclosure 20. In some embodiments, the use of heat exhaust can prevent freezing of cathode outlet 32. In some embodiments, heat exhaust structure 50 can lead warm air through the interior of enclosure 20 to outlet 22. In some embodiments an exhaust fan can be present at outlet 22 to facilitate venting of heat exhaust. In some embodiments, exhaust fan can be thermostatically controlled so the fan does not operate when not needed, for example when external temperatures are above 0°C.

In some embodiments, second tube 44 can lead outside enclosure 20 at or near enclosure outlet 22. The warm ambient air of heat exhaust structure 50 can help prevent the freezing of second tube 44.

Although a few embodiments have been shown and described, it will be appreciated by those skilled in the art that various changes and modifications might be made without departing from the scope of the invention as defined by the claims. The terms and expressions used in the preceding specification have been used herein as terms of description and not of limitation, and there is no intention in the use of such terms and expressions of excluding equivalents of the features shown and described or portions thereof, it being recognized that the invention is defined and limited only by the claims that follow.

## Claims

1. A fuel cell system comprising:
at least one fuel cell (30) or fuel cell unit (31) comprising a cathode exhaust outlet (36); and
an apparatus (10) for operating the at least one fuel cell (30) or fuel cell unit (31), the apparatus comprising:
a first tube (42) with one end operatively connected to the exhaust outlet (36), the first tube (42) configured for collecting water from the exhaust outlet (36);
a chamber (40) operatively connected to a second end of the first tube (42);
an enclosure (20) surrounding the chamber (40) and the cell (30) or unit (31) for capturing heat emitted from the cell (30) or unit (31), the enclosure (20) comprising an enclosure outlet (22); and
a second tube (44) leading from the top of the chamber (40) to the enclosure outlet (22),
wherein the chamber (40) condenses and holds water and wherein the enclosure (20) collects heat emitted from the cell (30) or unit (31);
**characterized by**
a heat exhaust structure (50) to direct heat emitted from the cell (30) or unit (31) to a position proximate the chamber (40) to prevent freezing of water in components internal to the enclosure (20) if an internal ambient temperature within the enclosure (20) is - 20°C;
wherein the second end of the first tube (42) is operatively connected to the chamber (40) at the top of the chamber (40).

2. The fuel cell system of claim 1 wherein the enclosure further comprises insulation to retain heat emitted from the fuel cell or fuel cell unit within the enclosure.

3. The fuel cell system of claim 2 wherein the insulation is non-uniform within the enclosure.

4. The fuel cell system of claim 3 wherein the chamber is disposed within the enclosure in an area of lower insulation.

5. The fuel cell system of any of claims 1 to 4 wherein the heat exhaust structure is adapted to direct heat emitted from the cell or unit to a position proximate the enclosure outlet.

6. The fuel cell system of any of claims 1 to 5 wherein the chamber is removable from the apparatus and wherein the water can be emptied from the chamber.

7. The fuel cell system of any of claims 1 to 6 wherein the fuel cell or fuel cell unit comprises a polymer electrolyte membrane (PEM) fuel cell and/or a direct-methanol fuel cell.

8. The fuel cell system of any of claims 1 to 6 wherein the chamber is positioned below the cell or unit.

9. A method for operating at least one fuel cell (30) or fuel cell unit (31) comprising a cathode exhaust outlet (36), the method comprising the steps of:
enclosing a chamber (40) and the cell or unit with an enclosure (20) surrounding the cell (30) or unit (31) for capturing heat emitted from the cell (30) or unit (31);
receiving water vapour from the exhaust outlet (36) produced as a by-product of electricity production within the cell or unit;
condensing at least a portion of the water vapour within the chamber (40) into water; and
venting non-condensed water vapour from the chamber (40);
further comprising the step of producing heat from the cell or unit as a by-product of electricity production and collecting the heat within the enclosure (20) surrounding the cell or unit;
**characterized by**
directing the heat proximate the chamber (40) via a heat exhaust structure (50) to prevent freezing of water in components internal to the enclosure (20) in the chamber (40) if an internal ambient temperature within the enclosure (20) is - 20°C; and
connecting pressurized exhaust to an ambient pressure of the chamber (40) to facilitate condensation.

10. The method of claim 9 further comprising the step of
storing the water collected in the chamber within the enclosure.

11. The method of any of claims 9 to 10 further comprising the step of
removing and emptying water collected in the chamber as required.

## Patentansprüche

1. Brennstoffzellensystem, umfassend:
wenigstens eine Brennstoffzelle (30) oder Brennstoffzelleneinheit (31) mit einem Kathodenabgasauslass (36); und
eine Vorrichtung (10) zum Betreiben der wenigstens einen Brennstoffzelle (30) oder Brennstoffzelleneinheit (31), wobei die Vorrichtung umfasst:
ein erstes Rohr (42) mit einem Ende, das in Wirkverbindung mit dem Abgasauslass (36) steht, wobei das erste Rohr (42) zum Sammeln von Wasser aus dem Abgasauslass (36) ausgebildet ist;
eine Kammer (40), die mit einem zweiten Ende des ersten Rohres (42) in Wirkverbindung steht;
ein Gehäuse (20), das die Kammer (40) und die Zelle (30) oder Einheit (31) umgibt, um die von der Zelle (30) oder Einheit (31) abgegebene Wärme aufzunehmen, wobei das Gehäuse (20) einen Gehäuseauslass (22) aufweist; und
ein zweites Rohr (44), das von der Oberseite der Kammer (40) zum Gehäuseauslass (22) führt,
wobei die Kammer (40) Wasser kondensiert und aufnimmt, und wobei das Gehäuse (20) die von der Zelle (30) oder Einheit (31) abgegebene Wärme sammelt;
**gekennzeichnet durch**
eine Wärmeabzugsstruktur (50), um die von der Zelle (30) oder der Einheit (31) abgegebene Wärme an eine Position in der Nähe der Kammer (40) zu leiten, um das Einfrieren von Wasser in Komponenten innerhalb des Gehäuses (20) zu verhindern, wenn eine interne Umgebungstemperatur innerhalb des Gehäuses (20) -20°C beträgt;
wobei das zweite Ende des ersten Rohres (42) mit der Kammer (40) an der Oberseite der Kammer (40) in Wirkverbindung steht.

2. Brennstoffzellensystem nach Anspruch 1, wobei das Gehäuse ferner eine Isolierung umfasst, um die von der Brennstoffzelle oder der Brennstoffzelleneinheit innerhalb des Gehäuses abgegebene Wärme zurückzuhalten.

3. Brennstoffzellensystem nach Anspruch 2, wobei die Isolierung innerhalb des Gehäuses ungleichmäßig ist.

4. Brennstoffzellensystem nach Anspruch 3, wobei die Kammer innerhalb des Gehäuses in einem Bereich mit niedrigerer Isolierung angeordnet ist.

5. Brennstoffzellensystem nach einem der Ansprüche 1 bis 4, wobei die Wärmeabzugsstruktur so ausgelegt ist, dass sie die von der Zelle oder Einheit abgegebene Wärme an eine Stelle in der Nähe des Gehäuseauslasses leitet.

6. Brennstoffzellensystem nach einem der Ansprüche 1 bis 5, wobei die Kammer aus der Vorrichtung herausnehmbar ist und wobei das Wasser aus der Kammer entleert werden kann.

7. Brennstoffzellensystem nach einem der Ansprüche 1 bis 6, wobei die Brennstoffzelle oder Brennstoffzelleneinheit eine Polymerelektrolytmembran (PEM)-Brennstoffzelle und/oder eine Direktmethanol-Brennstoffzelle umfasst.

8. Brennstoffzellensystem nach einem der Ansprüche 1 bis 6, wobei die Kammer unterhalb der Zelle oder Einheit angeordnet ist.

9. Verfahren zum Betreiben wenigstens einer Brennstoffzelle (30) oder Brennstoffzelleneinheit (31), die einen Kathodenabgasauslass (36) umfasst, wobei das Verfahren die folgenden Schritte umfasst:
Umschließen einer Kammer (40) und der Zelle oder Einheit mit einem die Zelle (30) oder Einheit (31) umgebenden Gehäuse (20) zur Aufnahme der von der Zelle (30) oder Einheit (31) abgegebenen Wärme;
Aufnehmen von Wasserdampf aus der Abgasöffnung (36), der als Nebenprodukt der Stromerzeugung in der Zelle oder Anlage entsteht;
Kondensieren wenigstens eines Teils des Wasserdampfes in der Kammer (40) zu Wasser; und
Entlüften von nicht kondensiertem Wasserdampf aus der Kammer (40);
weiter umfassend den Schritt des Erzeugens von Wärme aus der Zelle oder Einheit als Nebenprodukt der Stromerzeugung und des Sammelns der Wärme innerhalb des die Zelle oder Einheit umgebenden Gehäuses (20);
**gekennzeichnet durch**
Richten der Wärme in die Nähe der Kammer (40) über eine Wärmeabzugsstruktur (50), um das Einfrieren von Wasser in Komponenten innerhalb des Gehäuses (20) in der Kammer (40) zu verhindern, wenn eine interne Umgebungstemperatur innerhalb des Gehäuses (20) -20°C beträgt; und
Anschließen von mit Druck beaufschlagtem Abgas an einen Umgebungsdruck der Kammer (40) zur Erleichterung der Kondensation.

10. Verfahren nach Anspruch 9, weiterhin umfassend den Schritt von Speichern des in der Kammer gesammelten Wassers im Gehäuse.

11. Verfahren nach einem der Ansprüche 9 bis 10, umfassend ferner den Schritt von Entfernen und Entleeren des in der Kammer gesammelten Wassers nach Bedarf.

## Revendications

1. Système pile à combustible comprenant :
au moins une pile à combustible (30) ou une unité pile à combustible (31) comprenant un orifice de sortie d'échappement de cathode (36) ; et
un appareil (10) pour le fonctionnement de ladite pile à combustible (30) ou unité pile à combustible (31), l'appareil comprenant :
un premier tube (42) avec une extrémité fonctionnellement reliée à l'orifice de sortie d'échappement (36), le premier tube (42) configuré pour recueillir l'eau depuis l'orifice de sortie d'échappement (36) ;
une chambre (40) fonctionnellement reliée à une seconde extrémité du premier tube (42) ;
une enceinte (20) entourant la chambre (40) et la pile (30) ou l'unité (31) pour capturer la chaleur émise depuis la pile (30) ou l'unité (31), l'enceinte (20) comprenant un orifice de sortie d'enceinte (22) ; et
un second tube (44) conduisant depuis le sommet de la chambre (40) vers l'orifice de sortie d'enceinte (22),
où la chambre (40) condense et maintient l'eau et où l'enceinte (20) recueille la chaleur émise depuis la pile (30) ou l'unité (31) ;
**caractérisé en ce que**
une structure d'échappement de chaleur (50) pour diriger la chaleur émise depuis la pile (30) ou l'unité (31) vers une position proche de la chambre (40) pour empêcher la congélation de l'eau dans les composants internes au niveau de l'enceinte (20) si une température ambiante interne dans l'enceinte (20) est de -20°C ;
où la seconde extrémité du premier tube (42) est fonctionnellement reliée à la chambre (40) au sommet de la chambre (40).

2. Système pile à combustible selon la revendication 1 dans lequel l'enceinte comprend en outre l'isolation pour retenir la chaleur émise depuis la pile à combustible ou l'unité pile à combustible à l'intérieur de l'enceinte.

3. Système pile à combustible selon la revendication 2 dans lequel l'isolation est non uniforme à l'intérieur de l'enceinte.

4. Système pile à combustible selon la revendication 3 dans lequel la chambre est disposée à l'intérieur de l'enceinte dans une zone de moindre isolation.

5. Système pile à combustible selon l'une quelconque des revendications 1 à 4 dans lequel la structure d'échappement de chaleur est adaptée pour diriger la chaleur émise depuis la pile ou l'unité vers une position proche de l'orifice de sortie d'enceinte.

6. Système pile à combustible selon l'une quelconque des revendications 1 à 5 dans lequel la chambre peut être retirée de l'appareil et où l'eau peut être vidée de la chambre.

7. Système pile à combustible selon l'une quelconque des revendications 1 à 6 dans lequel la pile à combustible ou l'unité pile à combustible comprend une pile à combustible à membrane électrolytique polymère (PEM) et/ou une pile à combustible à méthanol direct.

8. Système pile à combustible selon l'une quelconque des revendications 1 à 6 dans lequel la chambre est positionnée en-dessous de la pile ou de l'unité.

9. Procédé de fonctionnement d'au moins une pile à combustible (30) ou une unité pile à combustible (31) comprenant un orifice de sortie d'échappement de cathode (36), le procédé comprenant les étapes de :
enfermement d'une chambre (40) et de la pile ou de l'unité avec une enceinte (20) entourant la pile (30) ou l'unité (31) pour la capture de la chaleur émise depuis la pile (30) ou l'unité (31) ;
réception de vapeur d'eau depuis l'orifice de sortie d'échappement (36) produite comme sous-produit de la production d'électricité à l'intérieur de la pile ou de l'unité ;
condensation d'au moins une portion de la vapeur d'eau dans la chambre (40) en eau ; et
ventilation de la vapeur d'eau non condensée depuis la chambre (40) ;
comprenant en outre l'étape de production de chaleur depuis la pile ou l'unité comme sous-produit de la production d'électricité et le recueil de chaleur à l'intérieur de l'enceinte (20) entourant la pile ou l'unité ;
**caractérisé par**
l'orientation de la chaleur proche de la chambre (40) par l'intermédiaire d'une structure d'échappement de chaleur (50) pour empêcher la congélation de l'eau dans les composants internes au niveau de l'enceinte (20) dans la chambre (40) si une température ambiante interne dans l'enceinte (20) est de -20°C ; et
la connexion de l'échappement sous pression à une pression ambiante de la chambre (40) pour faciliter la condensation.

10. Procédé selon la revendication 9 comprenant en outre l'étape de stockage de l'eau recueillie dans la chambre dans l'enceinte.

11. Procédé selon l'une quelconque des revendications 9 à 10 comprenant en outre l'étape de retrait et de vidange de l'eau recueillie dans la chambre tel que requis.
